# EUROPÄISCHE PATENTSCHRIFT

(11) **EP 0 857 954 B1**
(45) Veröffentlichungstag und Bekanntmachung des Hinweises auf die Patenterteilung: **30.05.2007**
(21) Anmeldenummer: 97101766.0
(22) Anmeldetag: 05.02.1997
(51) Int. Cl.: G01F 23/00

(54) **Seilsonde**
Cord level detector
Détecteur de niveau à détecteur suspendu à une ligne

(43) Veröffentlichungstag der Anmeldung: 12.08.1998
(73) Patentinhaber: Endress + Hauser GmbH + Co. KG, 79689 Maulburg (DE)
(72) Erfinder: Schmidt, Robert, 79585 Steinen (DE); Hässler, Jürgen, 79595 Rümmingen (DE)

(56) Entgegenhaltungen:
- CA-A- 2 071 424
- DE-C- 338 996
- DE-U- 9 103 122
- US-A- 4 673 819
- US-A- 4 899 499
- US-A- 5 383 259

## Beschreibung

Die Erfindung betrifft Seilsonden mit einem an einem Meßort, insb. auf einem Behälter, befestigten Gehäuse, mit einer Sonde, mit einem vom Gehäuse zu der Sonde führenden Seil und einer am Gehäuse angeordneten Seilbefestigung, wie sie handelsüblich sind.

Seilsonden werden häufig eingesetzt, wenn eine Sonde, z.B. ein kapazitives Füllstandsmeßgerät oder ein Drucksensor, an einem Ort anzubringen sind, der nicht ohne weiteres zugänglich ist. Ein Beispiel hierfür ist die Einbringung einer Sonde auf einer bestimmten Höhe in einem Tank oder Behälter. Das Seil dient dazu, die Sonde zu befestigen. Gleichzeitig kann die elektrische Versorgung und die Übertragung von Informationen, insb. von Meßsignalen, über diese Verbindung zwischen Sonde und Gehäuse erfolgen.

Damit solche Seilsonden für den industriellen Einsatz geeignet sind, muß gewährleistet sein, daß das Seil und dessen Befestigung allen prozeß-bedingten Belastungen, insb. hohen Zugkräften, standhält. Vorzugsweise hält die Befestigung auch solchen Zugkräften noch stand, die zum Seilbruch führen, z.B. Zugkräften von einigen tausend Newton.

Eine einfache Handhabbarkeit, z.B. eine Montage ohne Spezialwerkzeuge, ist vorteilhaft. Weiterhin ist zur Reduktion einer evtl. erforderlichen Lagerhaltung vorzusehen, daß das Seil auf eine den Anforderungen entsprechende Länge durch den Kunden kürzbar ist.

Bei den oben genannten handelsüblichen Sonden verläuft das Seil üblicherweise zwischen zwei über eine Verzahnung ineinandergreifenden Klemmblöcken.Dies ist zum Beispiel in der Druckschrift US-A-5 383 259 beschrieben für mit Haken versehene Endstücke, die auf einem elastisches Spannseil befestigt werden. In der US-A-5 383 259 werden insbesondere konusförmige Halterungselemente als Klemmblöcke beschrieben, die zur Befestigung an das Seil angelegt und dort zur Montage im Gehäuse gehalten werden müssen. Das Paket, bestehend aus Seil und einem inneneren und einem äußeren Klemmblock, wird dann in einen sich in gehäuse-abgewandter Richtung verjüngenden Gehäuseabschnitt eingebracht. Die Klemmblöcke sind ebenfalls in gehäuse-abgewandter Richtung verjüngt. Sofern die Klemmblöcke weit genug in den Gehäuseabschnitt eingebracht worden sind, ist das Seil durch sie und den Gehäuseabschnitt fest eingespannt. Durch nun auf das Seil einwirkende Zugkräfte werden die Klemmblöcke in dem Gehäuseabschnitt in gehäuse-abgewandter Richtung bewegt. Infolge der Verjüngung des Abschnitts in dieser Richtung wird die Einspannung durch diese Bewegung weiter angezogen und die Klemmblöcke ineinander verklemmt. Um den inneren Klemmblock verformen zu können, sind darin längs verlaufende Ausnehmungen vorgesehen.

Ein Nachteil einer solchen Seilsonde ist, daß zur Befestigung des Seils zwei Klemmblöcke erforderlich sind, die nicht fest mit dem Seil verbunden werden können, da sie sonst nicht mehr über die Verzahnung ineinander geschoben werden können. Hierdurch greift die Befestigung erst dann, wenn die Klemmblöcke weit genug in den Gehäuseabschnitt eingeführt wurden. Ist dies vorab nicht erfolgt, liegen die Klemmblöcke nicht eng am Seil an und dieses rutscht selbst bei geringer Zugbelastung durch die Klemmblöcke hindurch.

Es ist eine Aufgabe der Erfindung, eine Seilsonde anzugeben, die einfach ohne Spezialwerkzeuge zu montieren ist, bei der die Befestigung des Seils durch auf das Seil einwirkende Zugkräfte erfolgt und bei der das Seil auf eine den Anforderungen entsprechende Länge vom Kunden kürzbar ist.

Diese Aufgabe wird erfindungsgemäß dadurch gelöst,
- daß die Seilbefestigung ein Element mit einer axialen, konischen, sich in gehäuse-abgewandter Richtung verjüngenden Innenbohrung aufweist, in dem ein sich in gehäuse-abgewandter Richtung verjüngender Konus angeordnet ist,
   -- der das Seil eng umschließt und nur durch eine äußere Kraft auf diesem verschiebbar ist,
   -- der eine axiale zylindrische Bohrung aufweist, durch die das Seil hindurch geführt ist und
   -- der in Konuslängsrichtung verlaufende, die Wand des Konus durchdringende Ausnehmungen aufweist, durch die der Konus in radialer Richtung derart kompressibel ist, daß der Innendurchmesser des Konus reduzierbar ist.

Gemäß einer Ausgestaltung ist das Element in einem Abschnitt des Gehäuses angeordnet und liegt auf einem das Seil umgreifenden Dichtelement auf, das wiederum auf einem an eine Seilaustrittsöffnung angrenzenden Absatz des Abschnitts aufliegt.

Gemäß einer weiteren Ausgestaltung ist eine innere Mantelfläche des Konus aufgerauht. Sie weist insb. eine Strukturierung aus ringförmig umlaufenden sägezahnförmigen Rillen auf.

Gemäß einer Ausgestaltung sind die Ausnehmungen symmetrisch in dem Konus angeordnet.

Gemäß einer Ausgestaltung ist jede Stirnfläche des Konus von mindestens einer Ausnehmung durchbrochen.

Gemäß einer Ausgestaltung weisen die Ausnehmungen jeweils die Form eines Spalts auf und zwischen eng benachbarten Ausnehmungen verläuft ein Steg.

Gemäß einer Ausgestaltung sind die Ausnehmungen in Gruppen angeordnet, wobei eine Gruppe mindestens zwei parallel zueinander und parallel zur Konuslängsachse angeordnete Reihen von Ausnehmungen umfaßt und wobei zwischen den Reihen ein schmaler Wandstreifen besteht.

Gemäß einer Ausgestaltung sind die Stege jeweils auf der Höhe der Mitte der jeweils parallel dazu verlaufenden in der benachbarten Reihe angeordneten Ausnehmung plaziert.

Gemäß einer Ausgestaltung besteht der Konus aus einem harten Kunststoff, insb. aus einem Polyester, z.B. Polybutylenterephthalat (?), oder einem Polyamid.

Die Erfindung und deren Vorteile werden nun anhand der Figuren der Zeichnung, in denen ein Ausführungsbeispiel dargestellt ist, näher erläutert; gleiche Elemente sind in den Figuren mit gleichen Bezugszeichen versehen.
- Fig. 1: zeigt einen Längsschnitt durch eine Seilsonde;
- Fig. 2: zeigt eine perspektivische Ansicht des Konus von Fig. 1; und
- Fig. 3: zeigt eine geschnittene Ansicht des Konus von Fig.1.

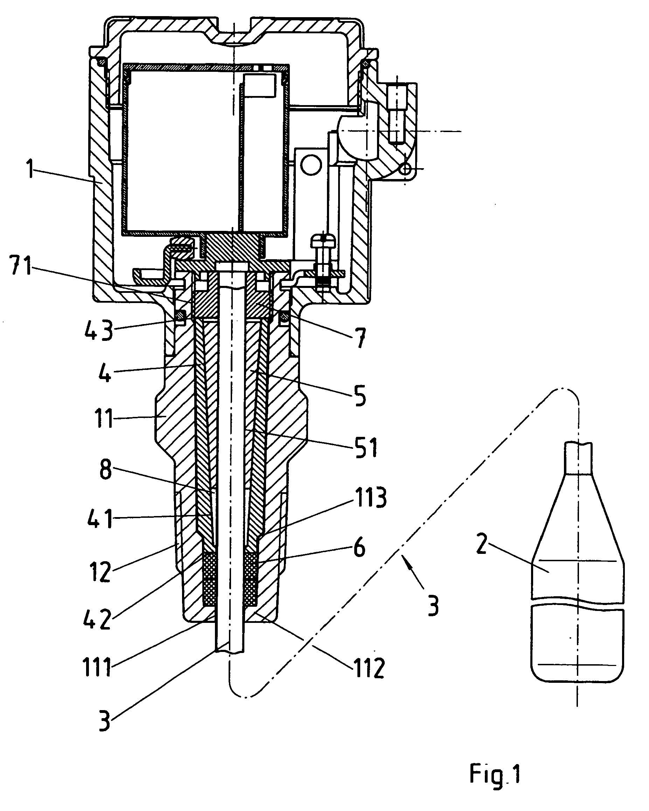

Das in Fig. 1 dargestellte Ausführungsbeispiel einer erfindungsgemäßen Seilsonde weist ein Gehäuse 1 und eine Sonde 2 auf. Die Sonde 2 ist durch ein Seil 3 mit dem Gehäuse 1 verbunden. Die Sonde 2 ist z.B. ein kapazitives Füllstandsmeßgerät, ein Drucksensor oder ein anderes Meßgerät.

Üblicherweise ist das Seil 3 ein ein- oder mehradriges Kabel, das eine der Anwendung entsprechende Zugfestigkeit aufweist und vorzugsweise eine elektrische Abschirmung aufweist. Beide Anforderungen werden von Kabeln erfüllt, die außen von einer Isolation aus einem Kunststoff und darunter von einem Metallgeflecht umgeben sind.

Das Seil 3 dient dazu die Sonde 2 zu befestigen. Die elektrische Versorgung der Sonde 2 sowie die Übertragung von Informationen, insb. von Meßsignalen, können ebenfalls über diese Verbindung erfolgen. In dem Gehäuse 1 ist beispielsweise eine in der Fig. 1 nicht dargestellte Auswerteelektronik zur weiteren Verarbeitung und/oder zur Anzeige der Meßwerte der Sonde 2 angeordnet.

Das Gehäuse 1 besteht z.B. aus einem Metall oder einem robusten Kunststoff. Es weist einen im wesentlichen zylindrischen Abschnitt 11 auf, an den ein Außengewinde 12 angeformt ist. Mit diesem ist das Gehäuse 1 in eine in Fig. 1 nicht dargestellte Öffnung eines Behälter einschraubbar. Selbstverständlich kann das Gehäuse 1 auch auf eine andere dem Fachmann bekannte Befestigungsweise, z.B. mittels Flanschen, montiert werden.

Das Gehäuse 1 ist durch einen den Boden des im wesentlichen zylindrischen Abschnitts 11 bildenden Absatz 112 abgeschlossen. Dieser weist als Seilaustrittsöffnung 111 eine zentrische Bohrung auf. Im Inneren des Abschnitts 11 ist ein im wesentlichen zylindrisches Element 4 angeordnet. Zwischen diesem und der Innenfläche des Abschnitts 11 besteht ein schmaler Spalt. Das Element 4 weist eine ringförmige Absatzfläche auf, mit der es sich auf einer sich radial ins Innere des Abschnitts 11 erstreckenden ringförmig umlaufenden Schulter 113 des Abschnitts 11 abstützt.

Das Element 4 besteht vorzugsweise aus einem harten Kunststoff, insb. aus einem Polyester, z.B. Polybutylenterephthalat, oder einem Polyamid. Das Element 4 liegt mit einer ersten ringförmigen Stirnfläche 42 auf einem auf dem Absatz 112 angeordneten, das Seil 3 umgreifenden Dichtelement 6 auf. Es ist ein Druckring 7 vorgesehen, der mit einem Außengewinde 71 von der dichtelement-abgewandten Seite des Abschnitts 11 in diesen eingeschraubt ist. Der Druckring 7 ist somit mit einer Frontfläche gegen eine zweite Stirnfläche 43 des Elements 4 gespannt. Das Element 4 wird dadurch gegen das Dichtelement 6 gepreßt, welches hierdurch seine Wirkung entfaltet. Da das Element 4 durch den Druckring 7 gegen die Schulter 113 gepreßt ist, wirkt auf das Dichtlement 6 ein definierter Druck.

Im Inneren des Abschnitts 11 ist eine Seilbefestigung angeordnet. Diese umfaßt das Element 4 und einen darin angeordneten, besonders ausgebildeten Konus 5. Das Element 4 weist eine axiale, konische, sich in gehäuse-abgewandter Richtung verjüngende Innenbohrung 41 auf. Der Durchmesser des Konus 5 nimmt in dieser Richtung in gleicher Weise ab. Der Konus 5 liegt mit einer äußeren Mantelfläche an der Innenfläche des Elements 4 an.

Der Konus 5 weist eine zentrische parallel zu dessen Längsachse verlaufende zylindrische Bohrung 51 auf, durch die das Seil 3 hindurchgeführt ist. Der Konus 5 umschließt das Seil 3 eng und ist nur durch eine äußere Kraft auf diesem verschiebbar. Die Höhe des Konus 5, also dessen Ausdehnung in axialer Richtung, ist geringer als die des Elements 4. Auf der dichtungs-zugewandten Seite vor dem Konus 5 besteht zwischen dem Seil 3 und dem Element 4 ein ring-konus-förmiger Spalt 8.

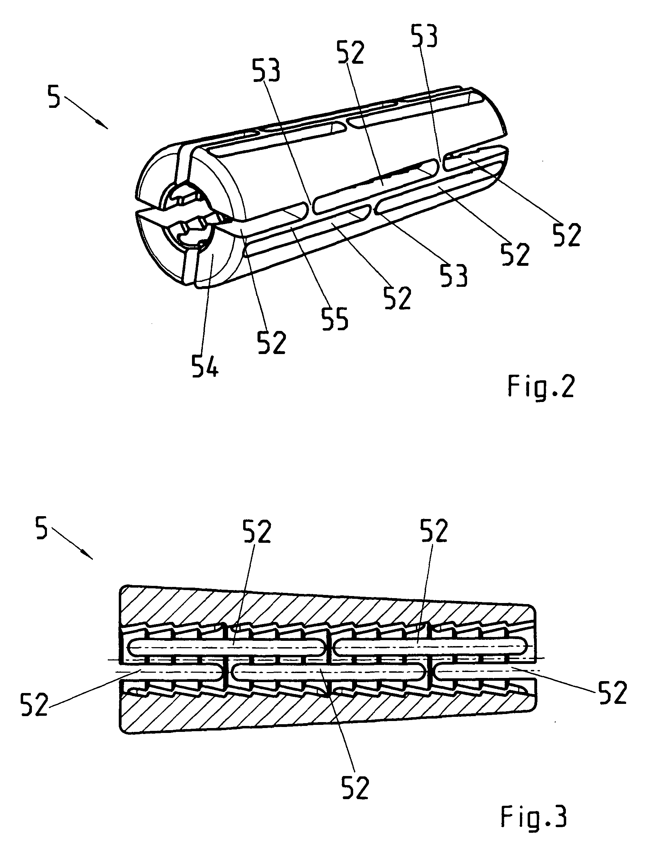

Fig. 2 zeigt eine perspektivische Ansicht und Fig. 3 eine geschnittene Ansicht des Konus 5. Dieser weist in Längsrichtung verlaufende, die Konuswand durchdringende Ausnehmungen 52 auf, durch die der Konus 5 derart kompressibel ist, daß dessen Innendurchmesser durch Zusammendrücken reduzierbar ist.

Die Ausnehmungen 52 sind symmetrisch in dem Konus 5 angeordnet. Dadurch wirkt auf das Seil 3 allseitig die gleiche Kraft ein, unabhängig davon wie stark der Konus 5 komprimiert ist. Eine Beschädigung des Seils 3 durch lokalisierte Krafteinwirkungen tritt nicht auf. Die Ausnehmungen 52 weisen jeweils die Form eines Spalts auf. Zwischen endseitig aneinander angrenzenden Ausnehmungen 52 verläuft ein Steg 53.

In dem dargestellten Ausführungsbeispiel sind die Ausnehmungen 52 in vier gleichmäßig um den Konus 5 verteilten Gruppen angeordnet. Jede Gruppe besteht aus zwei parallel zueinander und parallel zur Konuslängsachse angeordneten Reihen von Ausnehmungen 52. In dem dargestellten Ausführungsbeispiel weist eine der Reihen zwei längliche Ausnehmungen 52 auf, die so positioniert sind, daß zwischen den beiden ein Steg 53 besteht. Die Ausnehmungen 52 sind an deren dem Steg 53 gegenüberliegenden Enden jeweils durch eine Stirnfläche 54 des Konus 5 abgeschlossen. Die zu dieser Reihe benachbarte Reihe weist eine beidseitig durch Stege 53 abgeschlossene Ausnehmung 52 und zwei an die Stege 53 angrenzende etwa halb so lange nur einseitig am Ende abgeschlossene Ausnehmungen 52 auf. Die Ausnehmung 52 mit der vollen Länge ist, bezogen auf die Längsachse des Konus 5, in dessen Mitte angeordnet. An diese Ausnehmung 52 schließen, endseitig jeweils durch einen Steg 53 von der in der Mitte angeordneten Ausnehmung 52 abgetrennt, die halb so langen Ausnehmungen 52 an. Diese sind endseitig offen und durchbrechen die jeweilige Stirnfläche 54 des Konus 5.

Durch diese spezielle Anordnung liegt jeder Steg 53 auf der Höhe der Mitte der jeweils parallel dazu verlaufenden Ausnehmung 52. Ein jeweils zwischen den beiden Reihen verlaufender Wandstreifen 55 des Konus 5 weist eine geringe Breite auf und ist daher biegsam. Eine auf die äußere Mantelfläche des Konus 5 einwirkende Kraft bewirkt dessen Kompression. Dabei erfahren die Wandstreifen 55 eine Durchbiegung und die größe der Ausnehmungen 52 nimmt ab.

Der Konus 5 besteht aus einem harten Kunststoff, insb. aus einem Polyester, z.B. Polybutylenterephthalat, oder einem Polyamid. Vorzugsweise werden für den Konus 5 und das Element 4 die gleichen Werkstoffe eingesetzt. Dadurch ist sichergestellt, daß die beiden Bauteile die gleiche thermische Ausdehnung erfahren.

Durch die Ausnehmungen 52 ist der Konus 5 kompressibel, obwohl er aus einem ansich praktisch nicht elastisch verformbaren Werkstoff besteht. Es werden hierdurch die Vorteile eines harten, stabilen Werkstoffs mit denen eines elastischen Werkstoffs, nämlich dessen Verformbarkeit verbunden.

Der Innendurchmesser des Konus 5 im unbelasteten Zustand, d.h. wenn keine Kraft auf ihn einwirkt, ist so bemessen, daß der Konus 5 auf dem Seil 3 haftet. Aufgrund der Verformbarkeit des Konus 5 ist es möglich, diesen durch geringfügige Aufweitung seines Innendurchmessers auf das Seil 3 zu spannen. Er kann nur durch eine Kraftaufwendung entlang des Seils 3 verschoben werden. Dies wird noch verstärkt, indem die innere Mantelfläche des Konus 4 aufgerauht ist. Vorzugsweise weist sie eine Strukturierung aus ringförmig umlaufenden sägezahnförmigen Rillen auf. Sie hat somit eine Oberfläche, die Fischschuppen nachempfunden ist. Diese Strukturierung ist in Fig. 3 zu sehen.

Ist der Konus 5 einmal auf das Seil 3 aufgesteckt, so ist es unmöglich, ihn, z.B. durch Unachtsamkeit, zu verlieren.

Bei der Montage der Seilsonde wird das Seil durch die Seilaustrittsöffnung 111 in das Gehäuse 1 eingeführt, das Dichtelement 6 und das zylindrische Element 4 werden über das Seil 3 gesteckt, und der Konus 5 wird auf die gewünschte Position auf dem Seil 3 geschoben. Ist das Seil 3 länger als für die spezielle Anwendung erforderlich, wird ein überflüssiger Seilabschnitt abgeschnitten. Gegebenenfalls sind die Adern des Kabels im Seil mit entsprechenden Anschlüssen im Gehäuse 1 zu verbinden. Damit das Dichtelement 6 seine Wirkung entfaltet, ist die Druckschraube 7 anzuziehen. Weitere Schritte sind nicht erforderlich.

Da der Konus 5 entlang des Seils 3 nicht ohne eine äußere Kraft verschiebbar ist, bewirkt eine auf das Seil 3 in gehäuse-abgewandter Richtung ausgeübte Zugkraft eine Bewegung des Seils 3 und des Konus 5 in dem Element 4 in dichtungs-zugewandter Richtung. In diese Richtung nimmt der Innendurchmesser des Elements 4 ab. Da das Element 4 starr ist, erfährt der Konus 5 durch dessen Bewegung in dichtungs-zugewandter Richtung aufgrund seiner Konusform eine Gegenkraft die eine radial auf dessen Mitte gerichtete Kraftkomponente aufweist. Durch diese wird er komprimiert und sein Innendurchmesser reduziert. Je kleiner der Kegelwinkel des Konus 5 ist, d.h. je größer dessen Länge im Vergleich zu der Differenz von dessen größtem und dessen kleinstem Außendurchmesser ist, desto größer ist die radial auf dessen Mitte gerichtete Kraftkomponente, durch die das Seil 3 gehalten ist. Die Strukturierung der inneren Mantelfläche gräbt sich aufgrund dieser Kraftkomponente in die Oberfläche des Seils 3 ein. Es besteht somit eine form- und kraftschlüssige Verbindung zwischen dem Konus 5 und dem Seil 3.

Das Seil 3 ist in dem Konus 5 eingespannt. Je größer die wirkende Zugkraft ist, desto belastbarer ist diese Einspannung. Die Strukturierung der Innenfläche des Konus 5 hat hierbei eine unterstützende Wirkung. Wurde einmal eine Zugkraft auf das Seil 3 ausgeübt, ist der Konus 5 hierdurch in dem Element 4 eingespannt. Wird die Druckschraube 7 gelöst, so kann das Element 4 mit dem Konus 5 wieder aus dem Gehäuse 1 entnommen werden.

Es ist nicht zwingend erforderlich, das Element 4 als separates Bauteil auszubilden. Es kann ebenso ein integraler Bestandteil des Abschnitts 11 des Gehäuses 1 sein. Dieser kann dann eine entsprechend geringere Baugröße aufweisen. Allerdings ist bei einer solchen Ausführung nicht gewährleistet, daß der Konus 5 ohne weiteres aus dem Abschnitt 11 herausnehmbar ist.

Die Seilbefestigung mittels des beschriebenen Konus 5 benötigt nur sehr wenig Platz. Der Abschnitt 11 kann daher einen sehr geringen Außendurchmesser aufweisen und ist somit auch in sehr engen Behälteröffnungen einsetzbar. Bei einem Seil 3 mit einem Durchmesser von 8 mm kann der Außendurchmesser des Abschnitt 11 z.B. ca. 25 mm betragen.

Der Konus 5 und das Element 4 können Kunststoffspritzteile sein und sind somit kostengünstig herstellbar.

Auch ist eine solche Seilsonde unempfindlich gegen Vibrationen. Selbst wenn Vibrationen, die z.B. durch an einem Behälter angeordnete Pumpen oder Rührwerke auftreten, dazu führen, daß sich bei Abwesenheit einer Zugkraft die Einspannung des Konus 5 in dem Element 4 löst, so wird die Einspannung durch eine zu einem späteren Zeitpunkt wirksame Zugkraft automatisch wieder hergestellt.

## Patentansprüche

1. Seilsonde
- mit einem an einem Meßort, insb. auf einem Behälter, befestigten Gehäuse (1),
- mit einer Sonde (2),
- mit einem vom Gehäuse (1) zu der Sonde (2) führenden Seil (3) und
- mit einer am Gehäuse (1) angeordneten Seilbefestigung,
**dadurch gekennzeichnet,**
- **daß** die Seilbefestigung ein Element (4) mit einer axialen, konischen, sich in gehäuse-abgewandter Richtung verjüngenden Innenbohrung (41) aufweist, in dem ein sich in gehäuse-abgewandter Richtung verjüngender Konus (5) angeordnet ist,
-- der das Seil eng umschließt und nur durch eine äußere Kraft auf diesem verschiebbar ist,
-- der eine axiale zylindrische Bohrung (51) aufweist, durch die das Seil (3) hindurch geführt ist und
-- der in Konuslängsrichtung verlaufende, die Wand des Konus (5) durchdringende Ausnehmungen (52) aufweist, durch die der Konus (5) in radialer Richtung derart kompressibel ist, daß der Innendurchmesser des Konus (5) reduzierbar ist.

2. Seilsonde nach Anspruch 1, bei der das Element (4) in einem Abschnitt (11) des Gehäuses (1) angeordnet ist und auf einem das Seil (3) umgreifenden Dichtelement (6) aufliegt, das wiederum auf einem an eine Seilaustrittsöffnung (111) angrenzenden Absatz (112) des Abschnitts (11) aufliegt.

3. Seilsonde nach Anspruch 1, bei der eine innere Mantelfläche des Konus (4) aufgerauht ist.

4. Seilsonde nach Anspruch 1, bei der die innere Mantelfläche des Konus (4) eine Strukturierung aus ringförmig umlaufenden sägezahnförmigen Rillen aufweist.

5. Seilsonde nach Anspruch 1, bei der die Ausnehmungen (52) symmetrisch in dem Konus (4) angeordnet sind.

6. Seilsonde nach Anspruch 1, bei der jede Stirnfläche (53) des Konus von mindestens einer Ausnehmung durchbrochen ist.

7. Seilsonde nach Anspruch 1, bei der die Ausnehmungen (52) jeweils die Form eines Spalts aufweisen und zwischen eng benachbarten Ausnehmungen ein Steg (53) verläuft.

8. Seilsonde nach Anspruch 1, bei der die Ausnehmungen (52) in Gruppen angeordnet sind, wobei eine Gruppe mindestens zwei parallel zueinander und parallel zur Konuslängs-achse angeordnete Reihen von Ausnehmungen (52) umfaßt und wobei zwischen den Reihen ein schmaler Wandstreifen (55) besteht.

9. Seilsonde nach Anspruch 8, bei der die Stege (53) jeweils auf der Höhe der Mitte der jeweils parallel dazu verlaufenden in der benachbarten Reihe angeordneten Ausnehmung (52) plaziert sind.

10. Seilsonde nach Anspruch 1, bei der der Konus (5) aus einem harten Kunststoff, insb. aus einem Polyester, z.B. Polybutylenterephthalat, oder einem Polyamid, besteht.

## Claims

1. Rope probe
- with a housing (1) secured at a measuring location, particularly on a tank
- with a probe (2)
- with a rope (3) leading from the housing (1) to the probe (2)
- with a rope securing unit arranged on the housing (1)
**characterized in that**
- the rope securing unit exhibits an element (4) with an axial, conical internal bore (41), which tapers in the direction facing away from the housing (non-housing direction), in which a cone (5), which tapers in the non-housing direction, is arranged
-- which is enclosed tightly around the rope and can only be moved on this rope through external force
-- which exhibits an axial cylindrical bore (51) through which the rope (3) is guided and
-- which exhibits recesses (52), running lengthwise along the cone and penetrating the wall of the cone (5), through which the cone (5) can be compressed radially in such a way that the inner diameter of the cone (5) can be reduced.

2. Rope probe as per Claim 1 where the element (4) is arranged in a section (11) of the housing (1) and is seated on a sealing element (6) encompassing the rope (3) which, in turn, bears on a shoulder (112) of the section (11) bordering on a rope outlet opening (111).

3. Rope probe as per Claim 1 where an inner jacket area of the cone (4) is roughened.

4. Rope probe as per Claim 1 where the inner jacket area of the cone (4) exhibits a structure consisting of sawtooth-shaped grooves following a circular pattern.

5. Rope probe as per Claim 1 where the recesses (52) are arranged symmetrically in the cone (4).

6. Rope probe as per Claim 1 where each frontal area (53) of the cone is interrupted by at least one recess.

7. Rope probe as per Claim 1 where the recesses (52) are each like a gap and where there is a bar (53) between neighboring recesses.

8. Rope probe as per Claim 1 where the recesses (52) are arranged in groups whereby a group comprises two rows of recesses (4), running parallel to one another and parallel to the longitudinal axis of the cone, and where there is a narrow wall section (55) between the rows.

9. Rope probe as per Claim 8 where the bars (53) are located at the level of the center of the recess (52) running parallel to the bar in the neighboring row.

10. Rope probe as per Claim 1 where the cone (5) is made of a hard plastic, particularly a polyester such as polybutylene terephthalate, or a polyamide.

## Revendications

1. Sonde à câble
- avec un boîtier (1) fixé sur un point de mesure, notamment sur un réservoir,
- avec une sonde (2),
- avec un câble (3) allant du boîtier (1) à la sonde (2) et
- avec une fixation par câble disposée sur le boîtier (1),
**caractérisée en ce que**
- la fixation par câble présente un élément (4) comportant un alésage intérieur (41) axial, conique, dont le diamètre diminue en direction opposée au boîtier, dans lequel est disposé un cône (5), dont le diamètre diminue en direction opposée au boîtier,
-- qui enferme de façon étroite le câble et ne peut être déplacé sur ce dernier que par une force extérieure;
-- qui présente un alésage cylindrique axial (51), à travers lequel est guidé le câble (3) et
-- qui présente des cavités (52) traversant la paroi du cône, disposées dans le sens longitudinal du cône, cavités à travers lesquelles le cône (5) est compressible en direction radiale, de telle manière que le diamètre intérieur du cône (5) puisse être réduit.

2. Sonde à câble selon la revendication 1, pour laquelle l'élément (4) est disposé dans une section (11) du boîtier (1) et repose sur un élément d'étanchéité (6) enveloppant le câble (3), qui repose à son tour sur un épaulement (112) de la section (11) avoisinant l'ouverture de sortie de câble (111).

3. Sonde à câble selon la revendication 1, pour laquelle une surface latérale intérieure du cône (4) est rendue rugueuse.

4. Sonde à câble selon la revendication 1, pour laquelle la surface latérale intérieure du cône (4) présente une structure composée de rainures annulaires périphériques, en forme de dents de scie.

5. Sonde à câble selon la revendication 1, pour laquelle les cavités (52) sont disposées de façon symétrique dans le cône (4).

6. Sonde à câble selon la revendication 1, pour laquelle chaque surface frontale (53) du cône est évidée par au moins une cavité.

7. Sonde à câble selon la revendication 1, pour laquelle les cavités présentent la forme d'une fente et où une arête (53) se trouve entre des cavités voisines.

8. Sonde à câble selon la revendication 1, pour laquelle les cavités (52) sont disposées en groupes, un groupe comprenant au minimum deux rangées de cavités (52) disposées parallèlement l'une à l'autre et parallèlement à l'axe longitudinal du cône, et où il existe une bande de paroi étroite (55) entre les rangées.

9. Sonde à câble selon la revendication 8, pour laquelle les arêtes (53) sont placées à la hauteur du centre de la cavité (52) correspondante, disposée dans la rangée voisine parallèle.

10. Sonde à câble selon la revendication 1, pour laquelle le cône (5) est en matière plastique dure, notamment en un polyester, p. ex. en polybutènetéréphtalate, ou en un polyamide.
